# EUROPÄISCHE PATENTANMELDUNG

(11) **EP 4 390 460 A1**
(43) Veröffentlichungstag der Anmeldung: **26.06.2024**
(21) Anmeldenummer: 22216644.9
(22) Anmeldetag: 23.12.2022
(51) Int. Cl.: G01S 17/89, G01S 17/88, G01S 17/86, G01S 7/486, G01S 7/481, G01S 7/497

(54) **VERFAHREN UND SYSTEM ZUR INSPEKTION EINES IN EINEM FLUID ANGEORDNETEN OBJEKTS**

(71) Anmelder: Fraunhofer-Gesellschaft zur Förderung der angewandten Forschung e.V., 80686 München (DE)
(72) Erfinder: Gangelhoff, Jannis, 79110 Freiburg (DE)
(74) Vertreter: WSL Patentanwälte Partnerschaft mbB

(57) **Zusammenfassung**

Die vorliegende Erfindung betrifft ein Verfahren zur Inspektion eines in einem Fluid mit einer Trübung angeordneten Objekts mit den Schritten A) Erzeugen elektromagnetischer Strahlung mit einer Strahlungsquelle, B) Abstrahlen der elektromagnetischen Strahlung, C) Modulieren einer Amplitude oder einer Frequenz der elektromagnetischen Strahlung, D) Beleuchten einer Oberfläche des Objekts an einer Mehrzahl von Objektpunkten mit der modulierten elektromagnetischen Strahlung, wobei das Beleuchten der Oberfläche des Objekts entlang einer Beleuchtungsstrahlachse erfolgt, E) Fokussieren der von den Objektpunkten reflektierten elektromagnetischen Strahlung mit einer Optik mit einer Brennweite in Richtung eines Aufnehmers eines Detektors, wobei der Detektor eine Blende mit einer Blendenform in einer Blendenebene aufweist, wobei die Blendenebene um einen Detektorabstand von dem Aufnehmer beabstandet ist, wobei die Blendenebene um einen Blendenabstand von der Optik beabstandet ist, wobei das Fokussieren entlang einer Detektionsstrahlachse erfolgt, wobei die Beleuchtungsstrahlachse und die Detektionsstrahlachse einen Parallaxewinkel einschließen, wobei die Blende in einer Richtung senkrecht zu zumindest der Beleuchtungsstrahlachse oder der Blendenstrahlachse eine Blendenposition aufweist und wobei die Oberfläche des Objekts um einen Messabstand von dem Aufnehmer beabstandet ist, F) Erfassen der von der Oberfläche des Objekts reflektierten elektromagnetischen Strahlung mit dem Aufnehmer und für jeden aus der Mehrzahl von Objektpunkten G) Messen eines Maßes für eine Laufzeit der elektromagnetischen Strahlung von einem Referenzpunkt in einem Strahlengang der elektromagnetischen Strahlung zu dem jeweiligen Objektpunkt und H) Ausgeben des Maßes für die Laufzeit, wobei das Verfahren weiterhin die Schritte umfasst I) Erfassen eines Maßes für die Trübung des Fluids und J) Einstellen zumindest der Brennweite, des Blendenabstands, des Parallaxewinkels, der Blendenposition oder der Blendenform in Abhängigkeit von dem Maß für die Trübung.

## Beschreibung

Die vorliegende Erfindung betrifft ein Verfahren zur Inspektion eines in einem Fluid mit einer Trübung angeordneten Objekts mit den Schritten: A) Erzeugen elektromagnetischer Strahlung mit einer Strahlungsquelle, B) Abstrahlen der elektromagnetischen Strahlung, C) Modulieren einer Amplitude oder einer Frequenz der elektromagnetischen Strahlung, D) Beleuchten einer Oberfläche des Objekts an eine Mehrzahl von Objektpunkten mit der modulierten elektromagnetischen Strahlung, wobei das Beleuchten der Oberfläche des Objekts entlang einer Beleuchtungsstrahlachse erfolgt, E) Fokussieren der von den Objektpunkten reflektierten elektromagnetischen Strahlung mit einer Optik mit einer Brennweite in Richtung eines Aufnehmers eines Detektors, wobei der Detektor eine Blendenebene mit einer Blendenform in einer Blendenebene aufweist, wobei die Blendenebene um einen Detektorabstand von dem Aufnehmer beabstandet ist, wobei die Blendenebene um einen Blendenabstand von der Optik beabstandet ist, wobei das Fokussieren entlang einer Detektionsstrahlachse erfolgt, wobei die Beleuchtungsstrahlachse und die Detektionsstrahlachse einen Parallaxewinkel einschließen, wobei die Blende in einer Richtung senkrecht zu zumindest der Beleuchtungsstrahlachse oder der Blendenstrahlachse eine Blendenposition aufweist und wobei die Oberfläche des Objekts um einen Messabstand von dem Aufnehmer beabstandet ist, F) Erfassen der von der Oberfläche des Objekts reflektierten elektromagnetischen Strahlung mit dem Aufnehmer, und für jeden aus der Mehrzahl von Objektpunkten, G) Messen eines Maßes für eine Laufzeit der elektromagnetischen Strahlung von einem Referenzpunkt in einem Strahlengang der modulierten elektromagnetischen Strahlung zu dem jeweiligen Objektpunkt und H) Ausgeben des Maßes für die Laufzeit.

Die vorliegende Erfindung betrifft darüber hinaus ein System zur Inspektion eines in einem Fluid mit einer Trübung angeordneten Objekts mit einer Strahlungsquelle, wobei die Strahlungsquelle derart eingerichtet ist, dass sie in einem Betrieb des Systems elektromagnetische Strahlung erzeugt und abstrahlt, einer Modulationseinrichtung, wobei die Modulationseinrichtung derart eingerichtet ist, dass sie in dem Betrieb des Systems eine Amplitude oder eine Frequenz der elektromagnetischen Strahlung moduliert, einer Beleuchtungseinrichtung, wobei die Beleuchtungseinrichtung derart eingerichtet und angeordnet ist, dass sie in dem Betrieb des Systems eine Oberfläche des Objekts an einer Mehrzahl von Objektpunkten mit der modulierten elektromagnetischen Strahlung beleuchtet, einem Detektor mit einem Aufnehmer, wobei der Detektor eine Blende mit einer Blendenform in einer Blendenebene aufweist, wobei die Blendenebene um einen Detektorabstand von dem Aufnehmer beabstandet ist, einer Optik, wobei die Optik derart eingerichtet und angeordnet ist, dass sie die von dem Objekt reflektierte elektromagnetische Strahlung mit einer Brennweite in Richtung des Aufnehmers des Detektors fokussiert, wobei die Blendenebene um einen Blendenabstand von der Optik beabstandet ist, und einer Auswertungseinrichtung, wobei die Auswertungseinrichtung derart wirksam mit dem Aufnehmer verbunden ist, dass die Auswertungseinrichtung in dem Betrieb des Systems ein Detektorsignal von dem Aufnehmer erhält, wobei die Auswertungseinrichtung derart eingerichtet ist, dass sie in dem Betrieb des Systems für jeden aus der Mehrzahl von Objektpunkten die Schritte ausführt: Bestimmen eines Maßes für eine Laufzeit der elektromagnetischen Strahlung von einem Referenzpunkt in einem Strahlengang der modulierten elektromagnetischen Strahlung zu dem jeweiligen Objektpunkt und Ausgeben des Maßes für die Laufzeit.

Infrastrukturbauwerke, wie z.B. Brücken, Dämme und Molenköpfe, aber auch andere Objekte, wie z.B. Schiffe, müssen regelmäßig auf ihren baulichen oder konstruktiven Zustand hin untersucht werden. Die Inspektion der Geometrie und/oder der Oberfläche eines solchen Objekts ist dabei ein Teil der Untersuchung. Für eine solche Inspektion bieten sich optische Messverfahren an, da sie eine hohe räumliche Auflösung bei der Erfassung der Geometrie und der Oberfläche des Objekts ermöglichen. Zudem ist die Auswertung von mit optischen Messverfahren erfassten Daten zuverlässig möglich.

Als bedeutsam bei der Verwendung optischer Messverfahren erweist sich jedoch, dass die Umgebungsbedingungen im Bereich des Strahlengangs der verwendeten elektromagnetischen Strahlung das Messergebnis beeinflussen. An Land kann es regnen, Nebel oder Rauch können die Sicht einschränken. Unter Wasser sind es zumeist feine Partikel, die mitunter zu einer erheblichen Streuung der verwendeten elektromagnetischen Strahlung führen. Die Qualität der Inspektion verringert sich durch eine solche Trübung. Je größer die Trübung ist, desto weniger Licht gelangt von dem Objekt auf den entsprechenden Detektor und desto kürzer wird der zur Verfügung stehende maximale Messabstand des Systems bei der gegebenen Trübung.

Aus dem Stand der Technik ist es bekannt, zur Inspektion eines in einem Fluid angeordneten Objekts ein Laufzeitmessverfahren einzusetzen. Solche Laufzeitmessverfahren werden auch als Time of Flight-Verfahren (kurz ToF-Verfahren) bezeichnet. Das bekannteste ToF-Verfahren ist das LIDAR (Abkürzung für Englisch Light Detection and Ranging). Die aus dem Stand der Technik bekannten Verfahren und Systeme zur Inspektion von Objekten mithilfe eines ToF-Verfahrens verwenden eine feste Brennweite. Ändert sich die Trübung des Fluids, in dem sich das Objekt befindet, so folgt daraus eine verringerte Messgenauigkeit bei gleichem Messabstand und eine Verringerung des maximal zur Verfügung stehenden Messabstands.

Demgegenüber ist es Aufgabe der vorliegenden Erfindung, ein Verfahren und ein System zur Inspektion eines in einem Fluid mit einer Trübung angeordneten Objekts bereitzustellen, bei denen die Abhängigkeit der Messgenauigkeit von der Trübung des Fluids reduziert ist oder die von der Trübung unabhängig ist.

Die zuvor genannte Aufgabe wird durch ein Verfahren zur Inspektion eines in einem Fluid mit einer Trübung angeordneten Objekts gemäß dem beigefügten unabhängigen Anspruch 1 gelöst. Zur Lösung der Aufgabe weist das Verfahren der eingangs genannten Art zusätzlich die Schritte auf: I) Erfassen eines Maßes für die Trübung des Fluids und J) Einstellen zumindest der Brennweite, des Blendenabstands, des Parallaxewinkels, der Blendenposition oder der Blendenform in Abhängigkeit von dem Maß für die Trübung.

Die grundlegende Idee der vorliegenden Erfindung ist es, zumindest einen wesentlichen Parameter der Messanordnung in Abhängigkeit von einem Maß für die Trübung des Fluids zu verändern.

Ändert sich das Maß für die Trübung so wird auch einer der genannten Parameter geändert. In einer Ausführungsform erfolgt dieses Ändern automatisiert.

Das Fluid, in dem das Objekt angeordnet ist, ist in einer Ausführungsform eine Flüssigkeit, insbesondere Wasser. In einer Ausführungsform ist das Fluid ein Gas, insbesondere Luft. Eine Trübung einer Flüssigkeit wird insbesondere von feinen Partikeln in der Flüssigkeit hervorgerufen. In einem Gas, beispielsweise Luft, kann eine Trübung beispielsweise auf Rauch, Dampf oder Nebel zurückzuführen sein.

Eine Blende ist eine Einrichtung, welche den Querschnitt der elektromagnetischen Strahlung auf der Detektionsstrahlachse begrenzt. In einer Ausführungsform der Erfindung ist die Blende eine Lochblende. In einer Ausführungsform der Erfindung ist die Blende eine effektive Blende, die von der Begrenzung des Aufnehmers selbst gebildet wird. In diesem Fall liegt die Blendenebene in der Ebene des Aufnehmers. In einer solchen Ausführungsform ist der Detektorabstand, so wie er in der vorliegenden Anmeldung definiert ist, gleich Null.

Grundsätzlich ist es möglich, die Anpassung der Messgeometrie in Abhängigkeit von der Trübung über ein Einstellen entweder der Brennweite, des Blendenabstands, des Parallaxewinkels, der Blendenposition oder der Blendenform durchzuführen. Jedoch ist es auch möglich, mehrere der genannten Parameter gleichzeitig einzustellen.

Wenn die Blendenposition eingestellt wird, so ist darunter im Sinne der vorliegenden Anmeldung zu verstehen, dass die Lage der Blende in einer Richtung senkrecht zu zumindest der Beleuchtungsstrahlachse oder der Blendenstrahlachse eine Änderung erfährt.

In einer Ausführungsform der Erfindung erfolgt das Beleuchten der Oberfläche des Objekts an der Mehrzahl von Objektpunkten nacheinander, d. h. die Oberfläche des Objekts wird Objektpunkt für Objektpunkt gescannt oder gerastert. Allerdings sind Ausführungsformen denkbar, in denen mehrere Punkte gleichzeitig erfasst werden.

Während es grundsätzlich möglich ist, auch den Detektorabstand, d. h. den Abstand der Blendenebene von dem Aufnehmer zu ändern, ist in einer Ausführungsform der Erfindung der Detektorabstand unveränderlich. Ein Einstellen des Detektorabstands in Abhängigkeit von dem Maß für die Trübung erfolgt in einer Ausführungsform nicht.

In einer Ausführungsform der Erfindung ist der Referenzpunkt ein Element des Detektors im Strahlengang der elektromagnetischen Strahlung, insbesondere der Aufnehmer. In einer Ausführungsform der Erfindung ist der Referenzpunkt die Optik.

Bei einem ToF-Verfahren, so wie es die Grundlage für das erfindungsgemäße Verfahren und das erfindungsgemäße System bildet, wird eine amplitudenmodulierte oder frequenzmodulierte elektromagnetische Strahlung von der Strahlungsquelle erzeugt und abgestrahlt, wobei die Abstrahlung derart erfolgt, dass das Objekt an einem oder mehreren Punkten von der modulierten elektromagnetischen Strahlung beleuchtet wird. Die von der Oberfläche des Objekts zurückreflektierte oder zurückgestreute elektromagnetische Strahlung wird mit einem Detektor erfasst, der ein Messen eines Maßes für die Laufzeit der elektromagnetischen Strahlung von einem Referenzpunkt im Strahlengang ermöglicht. Aus dem Maß für die Laufzeit der elektromagnetischen Strahlung lässt sich der Abstand zwischen dem Referenzpunkt und dem Objektpunkt bestimmen.

Im Sinne der vorliegenden Anmeldung umfasst eine amplitudenmodulierte elektromagnetische Strahlung auch optische Pulse. Ist die elektromagnetische Strahlung frequenzmoduliert, so bezeichnet man ein solches ToF-Verfahren auch als FMCW-LIDAR.

Zum Messen des Maßes für die Laufzeit der elektromagnetischen Strahlung kommen verschiedene aus dem Stand der Technik bekannte Verfahren in Betracht.

In einer Ausführungsform wird ein an die Modulation der Amplitude der elektromagnetischen Strahlung phasengekoppeltes Referenzsignal mit der Modulationsfrequenz verwendet und mit der von dem Aufnehmer des Detektors erfassten modulierten Signalamplitude korreliert.

Alternativ wird ein Teil der elektromagnetischen Strahlung als Referenzsignal auf einen Referenzdetektor gegeben. Dieses Signal des Referenzsignal dient als Startsignal bei dem Bestimmen des Maßes für die Laufzeit. Der auf dem Aufnehmer eintreffende Puls der elektromagnetischen Strahlung dient dann als Stopsignal. Diese Ausführungsform ist insbesondere sinnvoll bei gepulster elektromagnetischer Strahlung als Spezialfall einer amplitudenmodulierten elektromagnetischen Strahlung.

In einer alternativen Ausführungsform, bei welcher die elektromagnetische Strahlung frequenzmoduliert ist, wird die Frequenz der elektromagnetischen Strahlung während der Abstrahlung von der Strahlungsquelle in Abhängigkeit von der Zeit, vorzugsweise linear, geändert. Ein Teil der elektromagnetischen Strahlung als Referenzsignal direkt auf den Detektor gegeben, ohne dass dieser Teil das Fluid durchlaufen hat und von der Oberfläche des Objekts reflektiert wurde. In dem Detektor entsteht dann ein Schwebungssignal, dessen Schwebungsfrequenz ein Maß für die Laufzeit ist.

In einer Ausführungsform der Erfindung wird in Schritt G) zusätzlich zu dem Maß für die Laufzeit eine Intensität bzw. eine mittlere Amplitude, gemessen. Sowohl die Information über die Laufzeit als auch über die Intensität können zur Erzeugung eines Bilds der Oberfläche des Objekts genutzt werden.

Unter dem maximalen Messabstand im Sinne der vorliegenden Erfindung wird derjenige Messabstand zwischen einem Objektpunkt auf der Oberfläche des Objekts und dem Aufnehmer verstanden, bei dem sich mit dem Aufnehmer des Detektors gerade noch ein auswertbares Maß für die Laufzeit der elektromagnetischen Strahlung messen lässt.

Da sich der maximale Messabstand nur sehr schwer messen lässt, beruht eine Ausführungsform der Erfindung auf einen gemessen maximalen Messabstand. Dieser wird in der Regel etwas kleiner sein als der theoretische maximale Messabstand, bildet aber eine gute Näherung.

Wünschenswert ist ein über alle Messabstände im Wesentlichen gleichbleibender Lichtstrom. Im Stand der Technik wird die Optik und der Detektor hierfür durch eine optimierte aber feste Wahl der Brennweite, des Blendenabstands, des Parallaxewinkels, der Blendenposition und der Blendenform optimiert. Die Optimierung des Blendenabstands erfolgt so, dass der Fokus für einen festgelegten nominellen maximalen Messabstand in der Blendenebene liegt. Der Parallaxewinkel und die Blendenform werden an eine nominelle Extinktion angepasst. Ändert sich jedoch die Trübung, so kann der tatsächliche maximale Messabstand deutlich größer oder deutlich kleiner sein als der nominelle maximale Messabstand.

In einer Ausführungsform der Erfindung ist das Kriterium zum Einstellen einer der oben genannten Parameter so definiert, dass der von der Optik in einer Ebene erzeugte Fokus für den maximalen Messabstand, welche die Messgeometrie bei einer gegebenen Trübung gerade noch ermöglicht, immer in der Blendenebene liegen soll. D.h., einer der oben genannten Parameter wird so eingestellt, dass für einen maximalen Messabstand, insbesondere für einen gemessenen maximalen Messabstand, der Blendenabstand mit dem für diesen maximalen Messabstand gebildeten Fokus zusammenfällt. Diese Bedingung lässt sich erfüllen, indem einer der genannten Parameter entsprechend eingestellt wird.

In einer alternativen Ausführungsform der Erfindung ist das Kriterium zum Einstellen einer der oben genannten Parameter so definiert, dass die Leistung der von der Optik in Richtung auf den Aufnehmer des Detektors fokussierten Strahlung für alle maximalen Messabstände über einen Bereich von Trübungen hinweg im Wesentlichen konstant ist. Auf diese Weise lässt sich der Dynamikbereich des Detektors für den jeweiligen maximalen Messabstand optimiert ausnutzen.

In einer Ausführungsform der Erfindung umfasst das Einstellen in Schritt J) die Schritte a) Vergrößern des Blendenabstands oder Verringern der Brennweite, wenn die Trübung zunimmt und b) Verringern des Blendenabstands oder Vergrößern der Brennweite, wenn die Trübung abnimmt.

In einer Ausführungsform der Erfindung erfolgt das Erfassen des Maßes für die Trübung des Fluids in Schritt I) mit einem von dem Detektor verschiedenen Trübungssensor. Derartige Trübungssensoren sind aus dem Stand der Technik in mannigfaltigen Ausführungsformen bekannt.

Beispielsweise wird in einer Ausführungsform das Maß für die Trübung mit einem optischen Verfahren erfasst. In einer Ausführungsform der Erfindung wird durch einen Trübungssensor eine Schwächung elektromagnetischer Strahlung entlang einer Messstrecke (Durchsicht) erfasst und diese Schwächung bildet das Maß für die Trübung. In einer Ausführungsform wird durch einen Trübungssensor eine Seitwärtsstreuung von elektromagnetischer Strahlung in dem Fluid erfasst und diese Seitwärtsstreuung bildet das Maß für die Trübung.

In einer Ausführungsform der Erfindung aber erfolgt das Erfassen des Maßes für die Trübung des Fluids in Schritt I) mit dem Detektor, welcher für das ToF-Verfahren verwendet wird. Um diesen Detektor auch zum Erfassen des Maßes für die Trübung des Fluids einzusetzen, gibt es eine Reihe von Möglichkeiten.

Gemäß einer Ausführungsform der Erfindung umfasst das Erfassen des Maßes für die Trübung ein Bestimmen einer Leistung der auf den Detektor treffenden, reflektierten elektromagnetischen Strahlung mit einer Laufzeit, die kürzer ist als der Messabstand für den aktuell gemessenen Objektpunkt.

Dieser Ausführungsform liegt die folgende Idee zugrunde: Mithilfe des ToF-Verfahrens lässt sich die erfasste Leistung in Abhängigkeit von der Laufzeit der elektromagnetischen Strahlung zwischen der Strahlungsquelle und dem Detektor messen und ggf. auftragen. Gibt es keine Trübung, so ist idealerweise das Signal für alle Laufzeiten, die kürzer sind als die Laufzeit bis zum Objektpunkt auf der Oberfläche des Objekts null. Gibt es eine Trübung, so führen die für die Trübung ursächlichen Partikel dazu, dass auch elektromagnetische Strahlung auf den Aufnehmer auftrifft, die die Oberfläche des Objekts gar nicht erreicht hat. Diese wird vor Erreichen der Oberfläche an den Partikeln reflektiert oder gestreut und hat daher eine deutlich kürzere Laufzeit. Die Leistung dieser aufgrund der Trübung des Fluids auf den Detektor gestreuten Strahlung bildet das Maß für die Trübung. Je größer die Trübung ist, desto mehr Leistung trifft für Laufzeiten, die kürzer sind als die Laufzeit, die dem Abstand der Oberfläche des Objekts zum Aufnehmer entspricht, auf den Aufnehmer. Der Verlauf einer Auftragung der Leistung in Abhängigkeit von der Laufzeit, der auf die Streuung an den Partikeln in dem Fluid und damit auf die Trübung zurückzuführen ist, wird auch als Trübungsbauch bezeichnet.

Um dieses Prinzip zum Erfassen des Maßes für die Trübung zu nutzen, stehen eine Reihe von Auswertungsmöglichkeiten zur Verfügung. Diese setzen immer ein Erfassen der Leistung in Abhängigkeit von der Laufzeit der elektromagnetischen Strahlung voraus. Beispielsweise kann man eine Mehrzahl von solchen Erfassungen der Leistung in Abhängigkeit von der Laufzeit heranziehen, den Median daraus bilden und von diesem Median ein Integral der Leistung über ein Intervall von Laufzeiten bilden, wobei alle Laufzeiten aus dem Intervall vor der Laufzeit liegen, welche die Strahlung von bzw. zu dem Objekt benötigt. Dieses Integral ist dann das Maß für die Trübung.

Alternativ wird in einer Ausführungsform mit Methoden der Bild- und Mustererkennung, beispielsweise auf Grundlage von künstlicher Intelligenz, der Verlauf der Leistungen in Abhängigkeit von der Laufzeit ausgewertet und ein Maß für die Trübung ermittelt.

In einer Ausführungsform der Erfindung bildet ein gemessener maximaler Messabstand das Maß für die Trübung.

Ein alternativer Ansatz zum Erfassen des Maßes für die Trübung mit Hilfe des Detektors, der auch für das Messen des Maßes für die Laufzeit verwendet wird, umfasst daher die Schritte: für eine Mehrzahl von Objektpunkten mit voneinander verschiedenen Messabständen Messen jeweils eines Maßes für die Laufzeit der elektromagnetischen Strahlung von dem Referenzpunkt zu dem jeweiligen Objektpunkt, Bestimmen des gemessenen maximalen Messabstands aus den Maßen für die Laufzeit und Verwenden des gemessenen maximalen Messabstands als das Maß für die Trübung des Fluids. Ein solches Verfahren kann auch als "Abstandshistogramm" bezeichnet werden. Vorteilhaft ist es, wenn einem solchen Abstandshistogramm eine große Anzahl von Messungen der Laufzeiten von Objektpunkten, beispielsweise 50.000 Objektpunkten, zugrunde gelegt werden. Stellt man einen der zuvor bezeichneten Parameter in Abhängigkeit von dem maximalen Messabstand ein, so erhält man ein für die gegebene Trübung optimiertes System.

Ermittelt man das Maß für die Trübung aus einem solchen Abstandshistogramm, so wird dabei über die Trübung hinaus auch die Reflektivität der Objektoberfläche bei dem Einstellen der oben bezeichneten Parameter berücksichtigt, denn diese geht in den gemessenen maximalen Messabstand ein. Hat die Oberfläche des Objekts eine geringe Reflektivität, so wird der gemessene maximale Messabstand zwischen der Oberfläche und dem Aufnehmer geringer ausfallen als bei einer Oberfläche mit idealer Reflektivität.

In einer Ausführungsform der Erfindung ist der Parallaxewinkel null, d. h. die Beleuchtungsstrahlachse und die Detektionsstrahlachse liegen aufeinander.

In einer Ausführungsform der Erfindung ist der Parallaxewinkel zwischen der Beleuchtungsstrahlachse und der Detektionsstrahlachse von null Grad verschieden. Durch eine solche Parallaxe gelangt aus dem Nahbereich der Optik gestreute Strahlung nicht auf den Aufnehmer. Dadurch kann verhindert werden, dass aus dem Nahbereich der Optik zu viel Licht auf den Aufnehmer trifft und den Detektor sättigt.

Bei einem von 0 Grad verschiedenen Parallaxewinkel ist es notwendig, dass bei dem Einstellen der Brennweite in Schritt J) der Fokus vor und nach dem Einstellen auf der Detektionsstrahlachse liegt. Stellt man in Schritt J) alternativ oder zusätzlich den Blendenabstand ein, so ist bei einem von 0 Grad verschiedenen Parallaxewinkel zu gewährleisten, dass die Blende vor und nach dem Einstellen auf der Detektionsstrahlachse liegt.

Gemäß einer Ausführungsform der vorliegenden Erfindung, bei der der Parallaxewinkel von 0 Grad verschieden ist, wird bei dem Einstellen des Blendenabstands in Schritt J) die Blendenebene und der Aufnehmer relativ zu der Optik entlang der Detektionsstrahlachse linear bewegt.

Gemäß einer Ausführungsform der Erfindung wird bei dem Einstellen des Blendenabstandes in Schritt J) zusätzlich der Parallaxewinkel eingestellt.

Gemäß einer Ausführungsform der vorliegenden Erfindung wird ein Detektorsignal des Aufnehmers mit einem von dem Maß für die Trübung abhängigen Verstärkungsfaktor verstärkt.

Zumindest eine der zuvor genannten Aufgaben wird auch durch ein System zur Inspektion eines in einem Fluid mit einer Trübung angeordneten Objekts gelöst, so wie es in dem darauf gerichteten unabhängigen Anspruch definiert ist. Dazu weist das System der eingangs genannten Art erfindungsgemäß eine Trübungserfassungseinrichtung und mindestens einen Aktuator auf, wobei die Trübungserfassungseinrichtung derart eingerichtet ist, dass sie in dem Betrieb des Systems ein Maß für die Trübung erfasst und derart wirksam mit der Auswerteeinrichtung verbunden ist, dass die Auswerteeinrichtung in dem Betrieb des Systems das Maß für die Trübung von der Trübungserfassungseinrichtung erhält, wobei die Auswertungseinrichtung derart wirksam mit dem mindestens einen Aktuator verbunden ist, dass in dem Betriebs des Systems der mindestens eine Aktuator ein Abstandssteuersignal von der Auswertungseinrichtung erhält und derart eingerichtet ist, dass die Auswertungseinrichtung in dem Betrieb des Systems das Abstandssteuersignal in Abhängigkeit von dem Maß für die Trübung bestimmt und an den mindestens einen Aktuator ausgibt, wobei der mindestens eine Aktuator derart eingerichtet und angeordnet ist, dass in dem Betrieb des Systems zumindest die Brennweite, den Blendenabstand oder die Blendenformenabhängigkeit von dem Abstandssteuersignal einstellt.

Soweit zuvor Aspekte der Erfindung im Hinblick auf das Verfahren beschrieben wurden, so gelten diese auch für das entsprechende System zur Inspektion eines in einem Fluid mit einer Trübung angeordneten Objekts. Soweit das Verfahren mit einem System gemäß dieser Erfindung ausgeführt wird, so weist dieses die entsprechenden Einrichtungen hierfür auf. Insbesondere sind Ausführungsformen des Systems zum Ausführen der zuvor beschriebenen Ausführungsformen des Verfahrens geeignet.

In einer Ausführungsform der Erfindung umfasst die Auswertungseinrichtung einen Rechner mit einem Prozessor, auf welchem in dem Betrieb des Systems Algorithmen zur Datenauswertung und Steuerung des Systems ablaufen.

Weitere Vorteile, Merkmale und Anwendungsmöglichkeiten der vorliegenden Erfindung werden anhand der folgenden Beschreibung einer Ausführungsform und der dazugehörigen Figuren deutlich. In den Figuren sind gleiche Elemente mit gleichen Bezugszeichen bezeichnet.
- Figur 1: ist eine schematische Darstellung eines LIDAR-Systems zur Inspektion eines Bauwerks unter Wasser.
- Figur 2: ist eine schematische Auftragung der normierten Signalamplitude der auf den Aufnehmer des Systems aus Figur 1 auftreffenden elektromagnetischen Strahlung in Abhängigkeit von der Laufzeit.
- Figur 3: ist eine schematische Darstellung einer Ausführungsform des Verfahrens zum Einstellen des Blendenabstands in Abhängigkeit von der Trübung des Wassers.
- Figur 4: ist eine schematische Darstellung einer alternativen Ausführungsform des Verfahrens zum Einstellen des Blendenabstands in Abhängigkeit von der Trübung des Wassers.

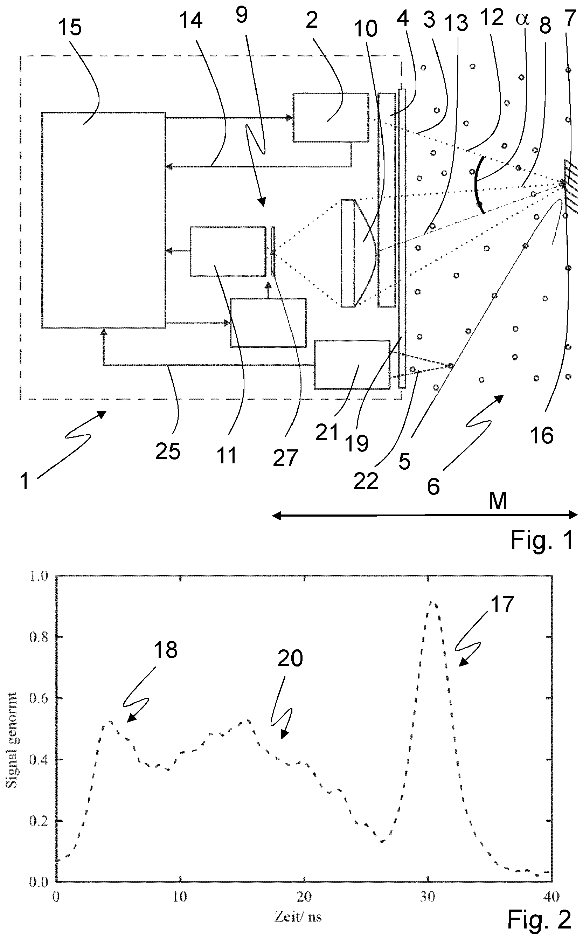

Figur 1 zeigt einen Aufbau eines LIDAR Systems 1 gemäß der vorliegenden Erfindung. Ein Laser 2 als Strahlungsquelle erzeugt modulierte elektromagnetische Strahlung 3 und strahlt diese ab. Eine Ablenkeinheit 4 leitet die Strahlung 3 auf die Oberfläche 5 eines in Wasser 6 befindlichen Objekts 7. Die Ablenkeinheit 4 ermöglicht es, die Oberfläche 5 des Objekts 7 Objektpunkt für Objektpunkt abzuscannen, sodass insgesamt ein Bild der Oberfläche 5 entsteht. Die von der Oberfläche 5 des Objekts 7 reflektierte oder gestreute Strahlung 8 wird von einem Detektor 9 erfasst. Der Detektor 9 umfasst als wesentliche Elemente eine Optik 10 und einen Aufnehmer 11. Die Optik 10 fokussiert die reflektierte elektromagnetische Strahlung 8 mit einer Brennweite in Richtung des Aufnehmers 11. In der gezeigten Ausführungsform schließen eine Strahlachse 12 der Beleuchtung und eine Strahlachse 13 der Detektion einen geringfügigen Parallaxewinkel α ein, d. h. die Strahlachsen 12,13 liegen nicht aufeinander.

Der Abstand zwischen der Oberfläche 5 des Objekts 7 und dem Aufnehmer 11 des Detektors 9 wird als Messabstand M bezeichnet. In dem gezeigten System 1 wird die Modulationsfrequenz der Modulation der Amplitude der elektromagnetischen Strahlung als Referenzsignal 14 verwendet und mit der von dem Aufnehmer 11 des Detektors 12 erfassten modulierten Signalamplitude in einer Auswertungseinrichtung 15 korreliert. Aus dieser Korrelation lässt sich ein Maß für die Laufzeit der elektromagnetischen Strahlung 8 zwischen der Oberfläche 5 des Objekts 7 und einem Referenzpunkt im Strahlengang des Systems 1 bestimmen. Dabei ist in der gezeigten Ausführungsform der Aufnehmer 11 der Referenzpunkt. Damit entspricht das Maß für die Laufzeit der elektromagnetischen Strahlung 8 in der dargestellten Ausführungsform unmittelbar dem Messabstand M.

Figur 2 zeigt die typische normierte Signalamplitude der von dem Aufnehmer 11 erfassten Strahlung 8 in Abhängigkeit von der Laufzeit in Nanosekunden für einen einzigen Objektpunkt 16 auf der Oberfläche 5. Mit dem Bezugszeichen 17 ist in der Auftragung der Figur 2 der Reflex von der Oberfläche 5 bezeichnet. Zudem ist in dem Signal ein mit dem Bezugszeichen 18 bezeichneter Reflex von einer Scheibe 19 vor der Ablenkeinheit 4 zu erkennen. Ferner ist auch ein großer Signalbeitrag 20 zeitlich zwischen dem Reflex 18 von der Scheibe 19 und dem Reflex von der Oberfläche 5 zu erkennen. Dieser Signalbeitrag 20 geht auf die Streuung der elektromagnetischen Strahlung 3 an Partikeln in dem Wasser 6 zurück und wird daher auch als Trübungsbauch bezeichnet.

In Abhängigkeit von der Trübung des Wassers 6 wird der Trübungsbauch 20 größer oder kleiner. Wird die Trübung größer, so gelangt immer weniger auf die Oberfläche des Objekts und von diesem auf den Aufnehmer. Im ungünstigsten geht das eigentlich zu erfassende Signal 17 von der Oberfläche 5 des Objekts 7 im Rauschen unter. Das Objekt 7 liegt dann außerhalb des maximalen Messabstands M.

Das System 1 weist eine Möglichkeit zum Einstellen in Abhängigkeit von der Trübung des Wassers 6 und damit zur Adaption an die Trübung auf. Daher umfasst das System 1 einen Trübungssensor 21, der ebenfalls unter Wasser angeordnet ist. Der Trübungssensor 21 erfasst die Rückstreuung, die die elektromagnetische Strahlung 22 beim Durchgang durch das Wasser 6 erfährt. Diese Rückstreuung bildet ein Maß für die Trübung des Wassers 6. Das Messsignal 25 des Trübungssensors 21, welches das Maß für die Trübung umfasst, wird an die Auswertungseinrichtung 21 übertragen.

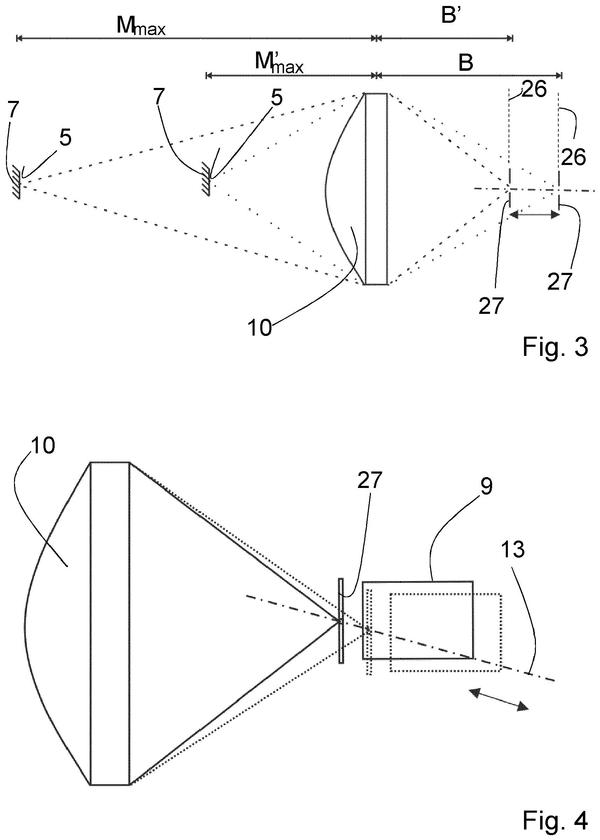

Die Auswertungseinrichtung 15 errechnet aus dem Maß für die Trübung eine optimierte Einstellung eines Blendenabstands B zwischen der fokussierenden Optik 10 und einer Blendenebene 26. Dies wird nun anhand der schematischen Darstellung aus Figur 3 erläutert. Erhöht sich die Trübung, so verringert sich der maximale Messabstand Mₘₐₓ bei der die Laufzeit von der Oberfläche 5 des Objekts 7 von dem System gerade noch erfassbar ist. In dem gezeigten Beispiel verkürzt sich der maximale Messabstand Mₘₐₓ auf Mₘₐₓ'. Um das System dann auf den geänderten maximal möglichen Messabstand Mₘₐₓ' zu optimieren, ist in dem gezeigten System der Blendenabstand B zwischen der Optik 10 und der Blendenebene 26 einer Blende in Form einer Lochblende 27 einstellbar ausgestaltet. In der gezeigten Ausführungsform sind die Brennweite der Optik 10 sowie ein Detektorabstand zwischen der Lochblende 27 und dem Aufnehmer 11 konstant. Daher verschiebt sich der Fokus, den die Optik 10 erzeugt, mit kürzer werdendem maximalem Messabstand Mₘₐₓ, Mₘₐₓ' von der Optik 10 weg. Es wird für die gezeigte Ausführungsform gefordert, dass der von der Optik 10 erzeugte Fokus für den maximalen Messabstand Mₘₐₓ, Mₘₐₓ' immer in der Blendenebene 26 liegt. Auf diese Weise ist der Lichtstrom der von der Oberfläche 5 des Objekts 7 reflektierten Strahlung maximal und dennoch erzielt die Lochblende 27 eine große Abschirmungswirkung gegenüber der von den Partikeln im Wasser gestreuten Strahlung. Daher vergrößert die Auswertungseinrichtung 15 über einen von dieser gesteuerten Aktuator (in den Abbildungen nicht gezeigt) den Blendenabstand B, B', wenn die Trübung zunimmt und verringert diesen, wenn die Trübung abnimmt. Damit der Detektorabstand zwischen der Blendenebene 26 und dem Aufnehmer 11 dennoch konstant bleibt, bewegt der Aktuator den Aufnehmer um die gleiche Strecke wie die Lochblende 27.

Figur 4 zeigt eine schematische Darstellung eines Systems 1 mit einer Parallaxe zwischen Beleuchtungsstrahlachse 12 und Detektionsstrahlachse 13. Die Beleuchtungsstrahlachse 12 und Detektionsstrahlachse 13 schließen einen Parallaxewinkel α größer null ein. Durch eine solche Parallaxe gelangt aus dem Nahbereich der Optik 10 im Wasser 6 gestreute Strahlung nicht auf den Aufnehmer 11. Aufgrund der Parallaxe muss die Kombination aus Aufnehmer 11 und Lochblende 27 beim Ändern des Blendenabstands gemeinsam entlang einer Geraden, welche mit der Detektionsstrahlachse 13 zusammenfällt von einem Aktuator verschoben werden.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: System
- 2: Laser
- 3: modulierte Strahlung
- 4: Ablenkeinheit
- 5: Oberfläche
- 6: Wasser
- 7: Objekt
- 8: reflektierte/gestreute Strahlung
- 9: Detektor
- 10: Optik
- 11: Aufnehmer
- 12: Beleuchtungsstrahlachse
- 13: Detektionsstrahlachse
- 14: Referenzsignal
- 15: Auswertungseinrichtung
- 16: Objektpunkt
- 17: Signalbeitrag vom Objektpunkt
- 18: Signalbeitrag von der Scheibe 19
- 19: Scheibe
- 20: Trübungsbauch
- 21: Trübungssensor
- 22: elektromagnetische Strahlung des Trübungssensors 21
- 25: Signal mit dem Maß für die Trübung
- 26: Blendenebene
- 27: Lochblende
- α: Parallaxewinkel
- M: Messabstand
- Mmax, Mmax': maximaler Messabstand
- B, B': Blendenabstand

## Patentansprüche

1. Verfahren zur Inspektion eines in einem Fluid (6) mit einer Trübung angeordneten Objekts (7) mit den Schritten
A) Erzeugen elektromagnetischer Strahlung (3) mit einer Strahlungsquelle (2),
B) Abstrahlen der elektromagnetischen Strahlung (3),
C) Modulieren einer Amplitude oder einer Frequenz der elektromagnetischen Strahlung (3),
D) Beleuchten einer Oberfläche (5) des Objekts (7) an einer Mehrzahl von Objektpunkten (16) mit der modulierten elektromagnetischen Strahlung (3),
wobei das Beleuchten der Oberfläche (5) des Objekts (7) entlang einer Beleuchtungsstrahlachse (12) erfolgt,
E) Fokussieren der von den Objektpunkten (16) reflektierten elektromagnetischen Strahlung (8) mit einer Optik (10) mit einer Brennweite in Richtung eines Aufnehmers (11) eines Detektors (9),
wobei der Detektor (9) eine Blende (27) mit einer Blendenform in einer Blendenebene (26) aufweist,
wobei die Blendenebene (26) um einen Detektorabstand von dem Aufnehmer (11) beabstandet ist,
wobei die Blendenebene (26) um einen Blendenabstand (B, B') von der Optik (10) beabstandet ist,
wobei das Fokussieren entlang einer Detektionsstrahlachse (13) erfolgt,
wobei die Beleuchtungsstrahlachse (12) und die Detektionsstrahlachse (13) einen Parallaxewinkel (α) einschließen,
wobei die Blende (27) in einer Richtung senkrecht zu zumindest der Beleuchtungsstrahlachse (12) oder der Blendenstrahlachse (13) eine Blendenposition aufweist und
wobei die Oberfläche (5) des Objekts (7) um einen Messabstand (M) von dem Aufnehmer (11) beabstandet ist,
F) Erfassen der von der Oberfläche (5) des Objekts (7) reflektierten elektromagnetischen Strahlung (8) mit dem Aufnehmer (11) und
für jeden aus der Mehrzahl von Objektpunkten (16)
G) Messen eines Maßes für eine Laufzeit der elektromagnetischen Strahlung (3, 8) von einem Referenzpunkt (11) in einem Strahlengang der elektromagnetischen Strahlung (3, 8) zu dem jeweiligen Objektpunkt (16) und
H) Ausgeben des Maßes für die Laufzeit,
**dadurch gekennzeichnet, dass** das Verfahren weiterhin die Schritte umfasst
I) Erfassen eines Maßes für die Trübung des Fluids (6) und
J) Einstellen zumindest der Brennweite, des Blendenabstands (B, B'), des Parallaxewinkels, der Blendenposition oder der Blendenform in Abhängigkeit von dem Maß für die Trübung.

2. Verfahren nach dem vorhergehenden Anspruch, wobei in Schritt G) zusätzlich zu dem Maß für die Laufzeit eine Intensität gemessen wird.

3. Verfahren nach einem der vorhergehenden Ansprüche, wobei das Einstellen in Schritt J) die Schritte umfasst
a) Vergrößern des Blendenabstands (B, B') oder Verringern der Brennweite, wenn die Trübung zunimmt und
b) Verringern des Blendenabstands (B, B') oder Vergrößern der Brennweite, wenn die Trübung abnimmt.

4. Verfahren nach einem der vorhergehenden Ansprüche, wobei das Erfassen des Maßes für die Trübung des Fluids (6) in Schritt I) mit einem von dem Detektor (9) verschiedenen Trübungssensor (21) erfolgt.

5. Verfahren nach einem der Ansprüche 1 bis 3, wobei das Erfassen des Maßes für die Trübung des Fluids (6) in Schritt I) mit dem Detektor (9) erfolgt.

6. Verfahren nach dem vorhergehenden Anspruch, wobei das Erfassen des Maßes für die Trübung ein Bestimmen einer Leistung der auf den Detektor (9) treffenden, reflektierten elektromagnetischen Strahlung mit einer Laufzeit, die kürzer ist als der Messabstand (M) des Objektpunkts (16), umfasst.

7. Verfahren nach Anspruch 5 oder 6, wobei das Erfassen des Maßes für die Trübung die Schritte umfasst
für eine Mehrzahl von Objektpunkten (16) mit voneinander verschiedenen Messabständen (M) Messen jeweils eines Maßes für eine Laufzeit der elektromagnetischen Strahlung (3, 8) von dem Referenzpunkt (11) zu dem jeweiligen Objektpunkt (),
Bestimmen des gemessenen maximalen Messabstands (Mₘₐₓ, Mₘₐₓ') aus den Maßen für die Laufzeit und
Verwenden des gemessenen maximalen Messabstands (Mₘₐₓ, Mₘₐₓ') als das Maß für die Trübung des Fluids.

8. Verfahren nach einem der vorhergehenden Ansprüche,
wobei die Beleuchtungsstrahlachse (12) und die Detektionsstrahlachse (13) einen von 0 Grad verschiedenen Parallaxewinkel (α) einschließen und
wobei zumindest bei dem Einstellen der Brennweite in Schritt J) der Fokus vor und nach dem Einstellen auf der Detektionsstrahlachse (13) liegt oder
bei dem Einstellen des Blendenabstands (B, B') die Blende (27) vor und nach dem Einstellen auf der Detektionsstrahlachse (13) liegt.

9. Verfahren nach dem vorhergehenden Anspruch, wobei bei dem Einstellen des Blendenabstands (13) in Schritt J) die Blendenebene (26) und der Aufnehmer (11) relativ zu der Optik entlang der Detektionsstrahlachse (13) linear bewegt werden.

10. Verfahren nach Anspruch 8 oder 9, wobei bei dem Einstellen des Blendenabstands (B, B') in Schritt J) zusätzlich der Parallaxewinkel (α) eingestellt wird.

11. Verfahren nach einem der vorhergehenden Ansprüche, wobei das Verfahren zusätzlich den Schritt aufweist
M) Verstärken eines Detektorsignals des Aufnehmers (11) mit einem zumindest von der Trübung oder dem Reflexionsvermögen abhängigen Verstärkungsfaktor.

12. System zur Inspektion eines in einem Fluid (6) mit einer Trübung angeordneten Objekts (7) mit
einer Strahlungsquelle (2),
wobei die Strahlungsquelle (2) derart eingerichtet ist, dass sie in einem Betrieb des Systems elektromagnetische Strahlung (3) erzeugt und abstrahlt,
einer Modulationseinrichtung (),
wobei die Modulationseinrichtung derart eingerichtet ist, dass sie in dem Betrieb des Systems (1) eine Amplitude oder eine Frequenz der elektromagnetischen Strahlung (3) moduliert,
einer Beleuchtungseinrichtung (4),
wobei die Beleuchtungseinrichtung (4) derart eingerichtet und angeordnet ist, dass sie in dem Betrieb des Systems (1) eine Oberfläche (5) des Objekts (7) an einer Mehrzahl von Objektpunkten (16) mit der modulierten elektromagnetischen Strahlung (3) beleuchtet,
einem Detektor (9) mit einem Aufnehmer (11),
wobei der Detektor (9) eine Blende (11) mit einer Blendenform in einer Blendenebene (26) aufweist,
wobei die Blendenebene (26) um einen Detektorabstand von dem Aufnehmer (11) beabstandet ist,
einer Optik (10),
wobei die Optik (10) derart eingerichtet und angeordnet ist, dass sie von dem Objekt (10) reflektierte elektromagnetische Strahlung (8) mit einer Brennweite in Richtung des Aufnehmers (11) des Detektors (9) fokussiert,
wobei die Blendenebene (26) um einen Blendenabstand (B, B') von der Optik (10) beabstandet ist,
einer Auswertungseinrichtung (15),
wobei die Auswertungseinrichtung (15) derart wirksam mit dem Aufnehmer 11 verbunden ist, dass sie in dem Betrieb des Systems (1) ein Detektorsignal von dem Aufnehmer (11) erhält,
wobei die Auswertungseinrichtung (15) derart eingerichtet ist, dass sie in dem Betrieb des Systems (1) für jeden aus der Mehrzahl von Objektpunkten (16) die Schritte ausführt
Bestimmen eines Maßes für eine Laufzeit der elektromagnetischen Strahlung (8) von einem Referenzpunkt () in einem Strahlengang der modulierten elektromagnetischen Strahlung () zu dem jeweiligen Objektpunkt (16) und
Ausgeben des Maßes für die Laufzeit,
**dadurch gekennzeichnet, dass** das System (1) darüber hinaus
eine Trübungserfassungseinrichtung (21) und mindestens einen Aktuator aufweist,
wobei die Trübungserfassungseinrichtung (21)
derart eingerichtet ist, dass sie in dem Betrieb des Systems (1) ein Maß für die Trübung erfasst, und
derart wirksam mit der die Auswertungseinrichtung (15) verbunden ist, dass die Auswertungseinrichtung (15) in dem Betrieb des Systems (1) das Maß für die Trübung von der Trübungserfassungseinrichtung (21) erhält,
wobei die Auswertungseinrichtung (15)
derart wirksam mit dem mindestens einen Aktuator verbunden ist, dass in dem Betrieb des Systems (1) der mindestens eine Aktuator ein Abstandssteuersignal von der Auswertungseinrichtung (15) erhält, und derart eingerichtet ist, dass sie in dem Betrieb des Systems (1) das Abstandssteuersignal in Abhängigkeit von dem Maß für die Trübung bestimmt und an den mindestens einen Aktuator ausgibt
wobei der mindestens eine Aktuator
derart eingerichtet und angerordnet ist, dass er in dem Betrieb des Systems (1) zumindest die Brennweite, den Blendenabstand (B, B') oder die Blendenform in Abhängigkeit von dem Abstandssteuersignal einstellt.
